# EUROPEAN PATENT APPLICATION

(11) **EP 0 842 608 A1**
(43) Date of publication of application: **20.05.1998**
(21) Application number: 96203129.0
(22) Date of filing: 08.11.1996
(51) Int. Cl.: A23C 19/032, A23C 19/04

(54) **Process for producing cheese**

(71) Applicant: Dairy Projects B.V., 4145 ZG Schoonrewoerd (NL)
(72) Inventor: Stadhouders, Jacobus Josephus, NL-6721 BD Bennekom (NL); Josso, Sylvia Lucia, NL-6708 CR Wageningen (NL)
(74) Representative: de Bruijn, Leendert C.

(57) **Abstract**

Ripening and flavour formation in cheese can be enhance by a cheese-making process using functional microorganisms, comprising, before the functional microorganisms are added to the cheese milk, binding to the functional microorganisms a lysozyme or other enzyme capable of weakening the cell wall of the microorganisms in a medium which has a reduced level of casein or other agents binding said cell wall weakening enzyme, said binding being performed in such a manner that no appreciable loss of intracellular enzymes of the microorganisms into the whey occurs.

## Description

The invention relates to a process for producing cheese using functional microorganisms, in particular bacterial starters.

It is often desired in cheese making to enhance or to modify the flavour development during ripening or to accelerate the ripening process. Even relatively small reductions of ripening times represent a considerable economic benefit, since they allow a more efficient use of production and storage facilities.

A method for modifying the ripening of soft cheeses (Saint-Paulin and Camembert) has been proposed by Goudedranche et al *Le Lait,* **66** (3), 189-206 (1986). This method consists in the addition of lysozyme to the precheese. A disadvantage of this method is that large amounts of lysozyme would be necessary. Similarly, Wright, *Cultured Dairy Products J.*, May 1990, 11-14, proposed to accelerate and modify the ripening of Cheddar cheese by microencapsulation of lysozyme in a dextran matrix and addition of the encapsulated to the curd.

Law et al (*J. Dairy Res.* **43**, 301-311 (1976) have reported the additional use of bacterial starter cells (mesophilic Lactococci) which have been previously incubated with lysozyme, in an attempt to prove that starter cells mediate in cheese flavour production. The starter cells were washed and harvested by centrifugation before lysozyme treatment and again harvested by centrifugation after lysozyme treatment after which the sedimented cells before adding to the cheese milk were suspended for some (unknown) time in a small part of the cheese milk. The authors conclude that starter intracellular enzymes do not play a direct part in cheese flavour formation. However, no noticeable useful effect was obtained, probably due to great losses during said treatment of the starter cells.

It has been found now that the ripening of cheeses, especially semi-hard and hard cheeses, can be accelerated and modified by pretreating functional cheese-making microorganisms with an enzyme capable of weakening the cell wall of the functional microorganisms so as to cause binding of the enzyme to the microorganisms, in a medium in which the binding of said cell wall weakening enzyme by other agents is limited. The incubation with lysozyme is carried out in such a way that the losses of intracellular enzymes of said microorganisms into whey is limited but that the lysis of the pretreated microorganisms in the young cheese is increased. Young cheese is understood to be the shaped cheese after separation from the whey.

Functional microorganisms are microorganisms that have a function in cheese-making. Such functions include acidification, fermentation and ripening. Functional cheese-making microorganisms are primarily lactic bacteria, especially thermophilic lactic bacteria. Suitable bacteria include those of the genera *Lactobacillus, Leuconostoc* and *Streptococcus (Lactococcus)*. They also include dairy propionic bacteria and other bacteria such as Coryneform bacteria, *Bacterium linens*, but also moulds and yeasts. In particular, the functional microorganisms are bacterial starters.

The functional microorganisms are treated, according to the invention, in a medium which has a reduced level of agents binding the cell wall weakening enzyme, such as casein, i.e. which contains less than 50% of the unmodified casein concentration of milk, especially less than 25%, in particular less than 10% of the milk casein concentration. The average unmodified casein concentration in milk is about 2.6 wt.%, and thus the casein concentration should at least be reduced to below 1.3 wt.%, and preferably below 0.65 wt.%.

In order to reduce the level of unmodified casein, the casein can be removed from the milk or can be transformed by digestion with a proteolytic enzyme such as pancreatin or by treatment with salt and/or acid. Especially, the medium is free of any cheese proteins, but contains some or all of the whey proteins. The medium can be whey as such, or advantageously whey permeate, the liquid and lower molecular weight solid fraction of whey, which may have been has been enriched in nutrients, e.g. tryptone. It The use of whey permeate may have the advantage that a possible heating step does not result in protein precipitation. The casein-free medium can also be a reconstituted medium such as a solution or dispersion of tryptone, yeast extract, lactose and minor nutrients in water.

The choice of the enzyme capable of weakening the cell wall of the functional microorganisms and the conditions of binding with this enzyme are such that the cells become more susceptible to lysis, without however provoking direct lysis. This means in particular that the incubation mixture of functional microorganisms and cell wall weakening enzyme (lysozyme) should not be kept under lysing conditions (room temperature or higher temperatures and the like) for an extended period after the binding process. This implies that concentration and washing steps are preferably omitted before the treated microorganisms are added to the cheese milk. Such steps are also preferably omitted before the binding step. Lysis is also substantially prevented during the cheese-making process, and is allowed to proceed in the young cheese, i.e. the shaped cheese separated from the whey, only.

The progress of the enzyme binding can be monitored by checking the free LDH (lactate dehydrogenase) activity in the medium. A substantial LDH activity in the medium can be used as an indication that the enzyme treatment is carried out in such a way that losses of intracellular enzymes of the added functional microorganisms into the whey are limited. The preferred enzyme to be used for weakening the cell wall is a lysozyme, for example commercially available chicken egg-white lysozyme. Other suitable enzymes include mutanolysin. Typical conditions for the enzyme treatment according to the invention are a lysozyme concentration of 0.2-5 mg/ml, in particular 0.3-2.5 mg/ml, a pH of 6-8, an incubation period and temperature of e.g. 15 min. - 20 h at 5-45°C, depending on the functional species used. These conditions result in avoiding lysis for a prolonged time. For example, the enzyme treatment can be performed for 15 minutes at about 37°C, or for 10 hours at about 5°C. The lysozyme concentration depends on the level of casein and any other agents binding the enzyme; it can be e.g. 0.2-1 mg/ml at low casein levels (< 0.26 wt.%) and e.g. 1-5 mg/ml at moderate casein levels (up to 1.3 wt.%).

It may be useful when treating functional microorganisms, to take measures that the treated microorganisms do not excessively contribute to the acidification, when they are added to the cheese milk, i.e. during the cheese-making process. This may be relevant especially for mesophilic starter cultures. Such measures may be a pretreatment of the (starter) microorganisms, for example a heat shock treatment, freeze shock treatment, or a treatment with an acid, such as lactic acid or hydrochloric acid.

When the enzyme binding has been performed, the treated microorganisms are preferably directly used in the cheese-making process. The treated microorganisms may be used as the only fermentation aid, but preferably they are used as an adjunct starter in combination with a conventional, i.e. untreated, microflora, such as a bacterial starter. If used in combination, the ratio between treated adjunct starter and non-treated starter cells can be generally 0.2-20, preferably 1-10, more preferably 2-5, expressed as cell numbers. In the cheese-making process, conventionally used additions and conditions can be applied.

The process of the invention can be used for producing any type of cheese. It is particularly useful for the production of semi-hard and hard cheeses, such as Gouda, Emmental and Cheddar. The process of the invention results in an enhanced flavouring and in a flavour improvement (reduced bitterness) of the cheese and/or in a reduction of the ripening time.

### Example 1

Limited binding of LDH to the casein complex of the curd particles during cheese making

### Preparation of free LDH of RP culture

A 16h RP culture, grown as described in example 2, was treated with lysozyme (2 mg/ml lysozyme at 37°C for 1 h.). After treatment with lysozyme, the culture was centrifugated (10 min. 10,000 g) before adding to the cheese milk.

### Model cheese production

Model cheese of skim milk was produced according to standard methods. No starter culture was used to exclude the forming of LDH other than from RP culture. The cheese container was supplied with 4.8% (v/v) supernatant of the lysozyme treated RP culture.

### Analyses of LDH before and after cheese making

Free LDH activity was measured in the RP culture after lysozyme treatment just before adding to the cheese milk. LDH activity was also measured in the whey (ca. 1½ h. after adding the supernatant to the cheese milk). The results of the LDH analyses are summarized in table 1 below.
This cheese making experiment with lysozyme treated RP culture was done 5 times.

**Table 1**

| Results of solubility of LDH in whey | | | |
|---|---|---|---|
| exp | LDH of supernatant of lysozyme treated RP culture | LDH of whey | % soluble LDH |
| 1 | 3.09 | 0.15 | 100 |
| 2 | 2.89 | 0.14 | 100 |
| 3 | 2.79 | 0.12 | 90 |
| 4 | 4.80 | 0.23 | 100 |
| 5 | 3.16 | 0.14 | 93 |
| LDH = activity in U/ml % soluble LDH = % of total free LDH soluble in whey 100% = 0.048 x LDH of supernatant of treated RP culture added to the cheese milk | | | |

The results in table 1 show that most of the free LDH is soluble in the whey (mean % soluble LDH is 97%) and does not attach to the casein complex of the curd particles, which means that the measuring of LDH activity of whey samples is a valid method for controling the lysis of lysozyme treated cultures during cheese making.

### Example 2

Production of Gouda cheese using RP-adjunct starter (thermophilic culture)

### Culture

A deep-frozen culture-concentrate of RP was thawed at room temperature and added (1.10⁶ cells / ml medium) to a medium contained whey permeate (45 g/l), skim milk (5% of total volume), phosphate solution (0,7% of total volume), yeast extract (4 g/l = 1,6% of 25 g/100 ml solution), trypton (10 g/l = 4,0% of 25 g/100 ml solution) and Tween 80 (0,1% of total volume). This culture was incubated at 37°C for 16 h. The quality of the culture was analyzed. The following analyses were performed: pH, germ number of thermophilic lactobacilli (TLb); microscopic pattern and LDH activity.

### Gouda production

Gouda cheese was produced according to standard methods with a normal Gouda starter culture (mesophilic). Two cheese containers were used. The first one was supplied with untreated RP adjunct culture and the second was supplied with RP adjunct culture that had been incubated with 1 mg/ml lysozyme at 37°C for 15 min.. 2.0% of RP culture was added to the cheese milk. The Gouda cheese produced with untreated RP is referred to below as Gouda 1, the Gouda produced with the lysozyme-terated RP is referred to below as Gouda 2.

### Analyses of Gouda cheese

Various analyses were performed during the production of the Gouda cheese: just before brining; after 1 day, 1 week, 2 weeks, 4 weeks, 6 weeks, 8 weeks and 12 weeks. The analyses comprised: number of thermophilic lactobacilli (TLb), LDH activity, quantity of amino acid nitrogen, as well as pH, water content.

### Analyses of RP adjunct starter

The cultures were analysed just before addition to the cheese milk. The analyses showed that RP culture treated with lysozyme had essential the same charateristics of the untreated culture, but for a slight decrease in TLb and a slight increase for LDH activity. The LDH activity of the untreated RP culture was 0,03 U/ml and 0,05 U/ml for the treated culture (max. LDH activity of a complete lysed RP culture is about 3,5 U/ml). The results show that the lysozyme treatment hasn't been caused untimely lost of intracellulair enzymes.

### Analyses of the whey

Just before draining, a whey sample was taken to determine LDH activity. The results of the LDH analyses (table 2) show that during the process of cheese-making lysis of RP lactobacilli was low; only 6 - 9 % of the cells were lysed during cheese-making.

**Table 2**

| Results of LDH activity in whey samples | | |
|---|---|---|
| | Gouda 1 | Gouda 2 |
| LDH | 0.004 | 0.006 |
| % | 6 | 9 |
| LDH = activity in U/ml % = percentage of total available LDH activity of RP-lactobacilli (100% = complete lysis) | | |

**Table 3**

| Results of thermophilic lactobacilli and amino acid assays | | | | |
|---|---|---|---|---|
| | Gouda 1 | | Gouda 2 | |
| time | TLb | [a.a] | TLb | [a.a] |
| before brining | 60 | - | 50 | - |
| 1 day | 50 | - | 20 | - |
| 1 week | 0.7 | 0.035 | 0.2 | 0.056 |
| 2 weeks | 0.4 | 0.054 | 0.1 | 0.077 |
| 4 weeks | 0.5 | 0.093 | 0.08 | 0.153 |
| 6 weeks | 0.3 | 0.110 | 0.09 | 0.208 |
| 8 weeks | 0.4 | 0.166 | 0.02 | 0.288 |
| 12 weeks | 0.05 | 0.220 | 0.01 | 0.369 |
| TLb = number of thermophilic lactobacilli x 10⁶ per g of cheese [a.a] = amino acid nitrogen concentration in mmol glycine per g dry matter | | | | |

### Analyses of the cheese during ripening

The results of the analyses referred to above are summarized in table 3.
The results show that lysozyme has a favourable effect on the lysis in cheese (faster decline of TLb). The amino acid nitrogen concentration, which is a more reliable indicator of the ripening process, is highest in Gouda cheese 2 during the whole ripening period of 12 weeks.

### Organoleptic assessment

The Gouda cheeses were also tested on flavour after 6, 8 and 12 weeks by a 9 trained panellists. The results are summarized in table 4 below.

**Table 4**

| Results of organoleptic analysis of Gouda 1 and 2 | | | | |
|---|---|---|---|---|
| | Gouda 1 | | Gouda 2 | |
| time | score | comment | score | comment |
| 6 weeks | 6,7 | broth | 6,9 | more broth-like, full flavoured |
| 8 weeks | 6,4 | broth, full flavoured, creamy, bitter | 7,1 | more broth-like, more full flavoured, fruity, sweet |
| 12 weeks | 6,5 | broth, full flavoured, fruity, bitter | 7,0 | more broth-like, more full flavoured, fruity |
| Score = mean flavour score (scale 4 - 8) | | | | |

The results in table 4 shows that there is a clear organoleptic difference between the two cheeses. This appears already after 6 weeks of ripening. Gouda cheese 2, to which lysozyme-treated RP was added, is more tasty (broth-like, full flavoured, fruity, sweet) and less bitter than Gouda cheese 1. The organolpetic assessment corresponds to the amino acid nitrogen content.

### Example 3

Effect of medium composition on lysozyme binding and lysis of RP-adjunct starter in cheese during ripening.

### Culture

RP culture is grown in 2 whey permeate media with a milk content 5 and 25% (v). For concentration of other ingredients see example 2. Both cultures were incubated at 37°C for 16h.

### Cheddar cheese production

Cheddar cheese was produced according to standard methods with a normal mesophilic starter culture. 4 cheese variations with RP adjunct starter were produced (see table 5).

**Table 5**

| Cheese variations produced with 2% RP adjunct starter | |
|---|---|
| | medium of RP-culture |
| cheeses A | **whey permeate with 5% milk** |
| A1 | untreated |
| A2 | treated |
| cheeses B | **whey permeate with 25 % milk** |
| B1 | untreated |
| B2 | treated |
| treated = lysozyme incubation : 1 mg/ml at 37°C for 15 min. | |

### Analyses of the cheese during ripening

The results of amino acid nitrogen analyses are summarized in table 6 below.

**Table 6**

| Results of amino acid assay | | | | |
|---|---|---|---|---|
| | Cheddars A | | Cheddars B | |
| | 1 | 2 | 1 | 2 |
| time | [a.a] | | [a.a] | |
| 1 week | 0.041 | 0.052 | 0.046 | 0.055 |
| 2 weeks | 0.066 | 0.113 | 0.075 | 0.085 |
| 4 weeks | 0.107 | 0.182 | 0.108 | 0.144 |
| 6 weeks | 0.162 | 0.261 | 0.162 | 0.235 |
| 8 weeks | 0.203 | 0.292 | 0.209 | 0.265 |
| 12 weeks | 0.245 | 0.326 | 0.246 | 0.281 |
| [a.a] = amino acid nitrogen concentration in mmol glycine per g dry matter | | | | |

The results of the amino acid content show that the composition of the medium, wherein the lysozyme treatment occurs, has an effect on the ripening process. This indicates indirectly that the efficiency of lysozyme binding to RP-lactobacilli is decreased with increasing milk content of the medium. This increase of efficiency of the lysozyme treatment is attributable to the loss of lysozyme activity by binding of lysozyme to caseins.

## Claims

1. Process for producing cheese comprising adding functional microorganisms to cheese milk, comprising, before the functional microorganisms are added to the cheese milk, binding an enzyme capable of weakening the cell wall of the functional micro-organisms to the microorganisms in a medium which has a reduced level of other agents binding said cell wall weakening enzyme, said binding being performed in such a manner that no appreciable loss of intracellular enzymes of the microorganisms into the whey occurs, but lysis of the microorganisms in young cheese is increased.

2. Process according to claim 1, wherein the microorganisms are added to the cheese milk immediately after said binding, in particular without an intermediate concentration and/or washing step.

3. Process according to claim 1 or 2, wherein said cell wall weakening enzyme is a lysozyme.

4. Process according to any one of claims 1-3, wherein 0.2 - 5 mg/ml of cell wall weakening enzyme is used.

5. Process according to any one of claims 1-4, wherein said medium is a medium which contains less than 1.3 wt.%, preferably less than 0.65 wt.% of casein or wherein casein has been has been subjected to the action of a salt, an acid and/or a proteolytic enzyme.

6. Process according to claim 5, wherein said medium is whey or whey permeate.

7. Process according to any one of claims 1-5, wherein said functional micro-organisms, before said binding, have been pretreated so as to reduce their acidifying activity.

8. Process according to claim 6, wherein said pretreatment comprises a treatment with acid and/or a heat treatment and/or a freeze shock treatment.

9. Process according to any one of the previous claims, wherein said functional microorganisms comprise a bacterial adjunct starter culture.

10. Process according to any one of the previous claims, wherein said functional microorganisms comprise one or more thermophilic lactobacilli.

11. Process according to any one of the previous claims, wherein said functional microorganisms to which said cell wall weakening enzyme has been bound, are added at a level of between 10⁷ and 10⁹, especially between 2*10⁷ and 5*10⁸ per g of cheese.
